# EUROPEAN PATENT SPECIFICATION

(11) **EP 4 016 551 B1**
(45) Date of publication and mention of the grant of the patent: **17.06.2026**
(21) Application number: 20214472.1
(22) Date of filing: 16.12.2020
(51) Int. Cl.: G21G 4/06, G21G 1/02, G21C 23/00

(54) **RADIATION SOURCE FOR NONDESTRUCTIVE TESTING**
STRAHLUNGSQUELLE ZUR ZERSTÖRUNGSFREIEN PRÜFUNG
SOURCE DE RADIATION POUR ESSAIS NON DESTRUCTIFS

(43) Date of publication of application: 22.06.2022
(60) Divisional application: 23164606.8
(73) Proprietor: Chiyoda Technol Corporation, Bunkyo-ku Tokyo 113-8681 (JP)
(72) Inventor: Kanazawa, Hidetaka, Tokyo, 113-8681 (JP); Saito, Takashi, Tokyo, 113-8681 (JP); Ishii, Takashi, Tokyo, 113-8681 (JP); Kawamura, Hiroshi, Tokyo, 113-8681 (JP)
(74) Representative: Twelmeier Mommer & Partner

(56) References cited:
- EP-A1- 3 465 697
- WO-A2-2004/109716
- GB-A- 2 119 157
- US-A- 3 324 540

## Description

### Technical Field

0001 The present invention relates to a radiation source for a nondestructive inspection. In particular, the present invention relates to a radiation source for a nondestructive inspection with which an image having a high geometric resolution is obtained by a nondestructive inspection and that can make target-by-target source strength uniform and is easily recyclable.

### Background Art

0002 Japanese Patent Application Laid-Open No. 2010-127825 describes a technique for manufacturing radiation sources for a nondestructive inspection (hereinafter, may be referred to simply as radiation sources) by using a nuclear reactor. A radiation source according to the preamble of claim 1 is disclosed in EP 3 456 697 A1 and WO 2004/109761 A2.

### SUMMARY OF INVENTION

### Technical Problems to be solved

0003 However, since three to four disc-like targets having, for example, a diameter of 1.5 mm × a thickness of 0.2 mm have conventionally been stacked to form a cylindrical radiation source, radiations emitted from the top and bottom surfaces and the side surface of the radiation source have been anisotropic. In addition, there have also been problems such as nonuniform target-by-target source strength, low geometric resolution of a nondestructive inspection image (for example, picture), difficulty in setting an intended source strength during re-irradiation due to target-by-target variations in source strength, and lack of target recyclability.

0004 The present invention has been achieved to solve the foregoing conventional problems, and an object thereof is to provide a radiation source for a nondestructive inspection that provides a nondestructive inspection image having a high geometric resolution and has no radiation source anisotropy, uniform target-by-target source strength, and high target recyclability.

### Means for solving the Problems

0005 The present invention solves the foregoing problems by forming an irradiation target of a radiation source for a nondestructive inspection into a small sphere with a diameter of about 0.5 to 1.5 mm.

0006 The spherical irradiation target can be iridium metal containing natural or enriched iridium 191.

0007 The present invention also solves the foregoing problems by providing a spherical irradiation target manufactured by dropping molten iridium into a liquid.

### Advantageous Effects of Invention

0012 According to the present invention, the irradiation target of small spherical shape can improve the geometric resolution of a nondestructive inspection image compared to a disc-like one. In addition, the anisotropy of the radiation source can be eliminated. Moreover, smaller variations in source strength improves the recyclability of the target, so that the scarce resources can be efficiently used to reduce material cost. Uniform radiation sources for a nondestructive inspection can be efficiently manufactured for improved cost performance. The radiation sources can be easily manufactured with low cost since the capsule is rotated by utilizing the downward flow of the reactor primary coolant without rotating the capsule by driving a motor with an external power supply. These and other novel features and advantages of the present invention will become apparent from the following detailed description of preferred embodiments.

### BRIEF DESCRIPTION OF DRAWINGS

0013
FIG. 1 is a diagram schematically showing a first half of an iridium 192 (¹⁹²Ir) manufacturing procedure according to an embodiment of the present invention;
FIG. 2 is a diagram schematically showing a second half of the same;
FIG. 3 is a chart showing a nuclear evaluation of iridium targets obtained by enriching iridium 191 (¹⁹¹Ir) for describing the principle of the present invention;
FIG. 4A is a diagram showing the effect (self shielding effect) of an ¹⁹¹Ir reaction cross section for the same purpose;
FIG. 4B is a chart showing the rate of generation of ¹⁹²Ir in outer spheres for the same purpose;
FIG. 4C is a chart showing the rate of generation of ¹⁹²Ir in inner spheres for the same purpose;
FIG. 5 is a chart showing a result of an evaluation of the rotatability of a rotating capsule by a reactor primary coolant for the same purpose; and
FIG. 6 is a schematic diagram showing a cross section of an ¹⁹²Ir manufacturing rotating capsule usable in the foregoing embodiment.

### Description of Embodiments

0014 An embodiment of the present invention will be described in detail below with reference to the drawings. It should be noted that the present invention is not limited by the description of the following embodiment or practical examples. Components of the following embodiment and practical examples include ones readily conceivable by those skilled in the art, substantially identical ones, and ones so-called within the range of equivalency. The components disclosed in the following embodiment and practical examples may be combined as appropriate, and may be selectively used as appropriate.

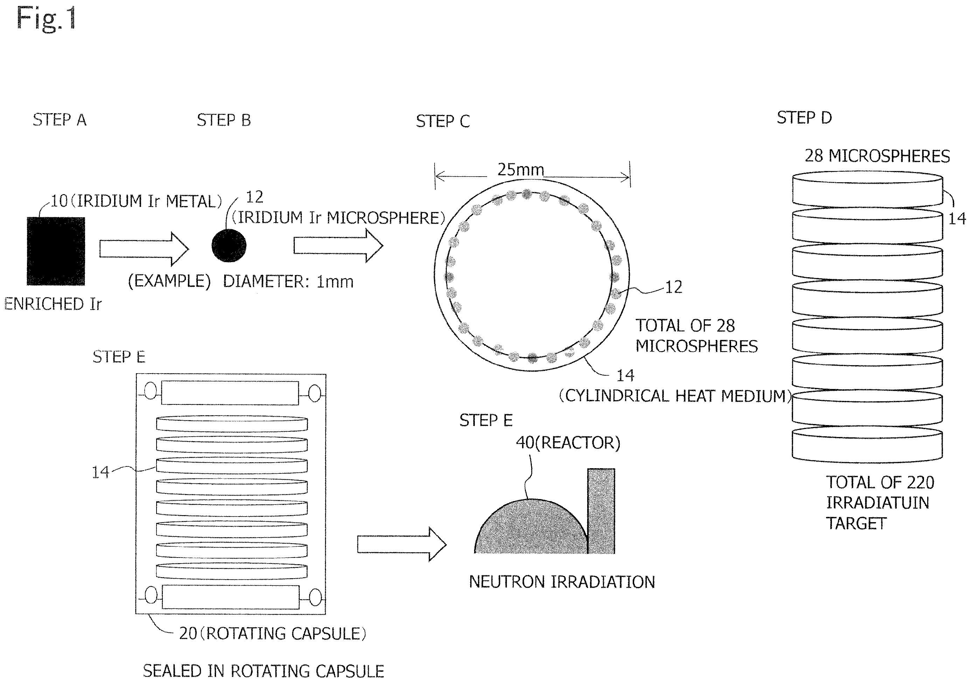

0015 FIG. 1 schematically shows a first half of an ¹⁹²Ir manufacturing procedure.

0016 As shown in steps A and B of FIG. 1, iridium (Ir) microspheres 12 with a diameter of 1 mm, a diameter tolerance of ±0.02 mm, and a weight of 12 mg or so, for example, are manufactured from iridium (Ir) metal 10 made of enriched iridium (Ir) that is 80%-enriched ¹⁹¹Ir, for example.

0017 The manufacturing uses an iridium metal melting technique. The Ir microspheres 12 are manufactured by dropping molten iridium into a liquid (such as water).

0019 Next, as shown in step C of FIG. 1, 28 Ir microspheres 12 are loaded per layer as appropriately spaced at distances of, e.g., 2 mm along a 20-mm-diameter inner circumference of a cylindrical aluminum heat medium 14 having a diameter of, e.g., 25 mm. As shown in step D of FIG. 1, for example, eight such layers are loaded in a stacked manner vertically at appropriate distances to provide a total of approximately 220 irradiation targets, for example.

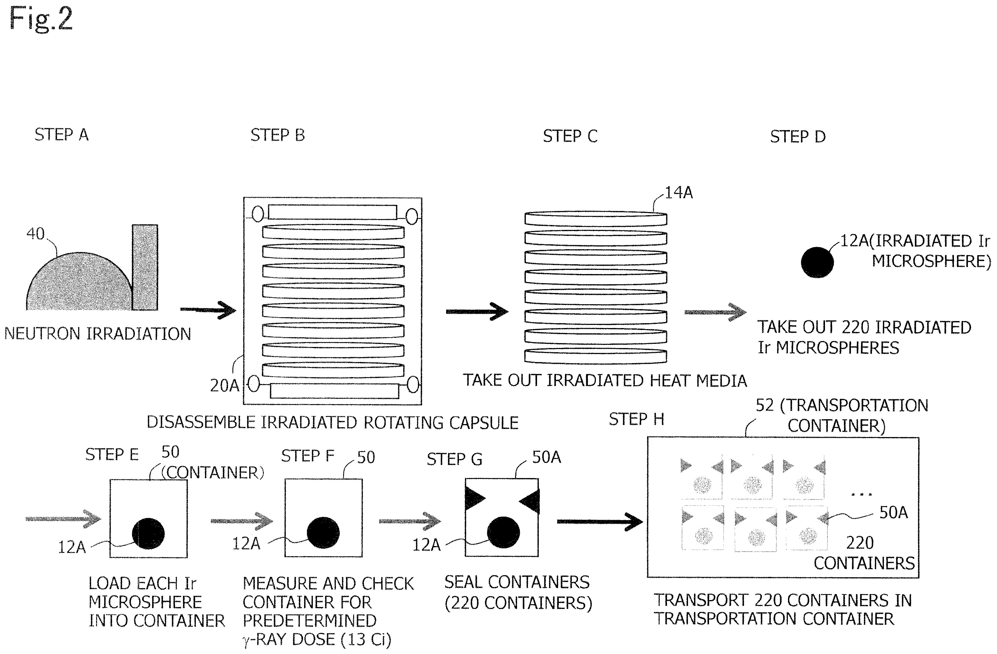

0020 Next, as shown in step E of FIG. 1, the eight layers of heat media 14 loaded with the Ir microspheres 12 that are irradiation targets are sealed in a rotating capsule (also referred to as an irradiation ampule) 20. As shown in step F of FIG. 1 (= step A of FIG. 2), the rotating capsule 20 is inserted into a reactor 40, and irradiated with neutrons while being rotated by a downward flow of the reactor primary coolant. The reason why the rotating capsule 20 is not fixed but rotated is to make the neutron irradiation uniform. The present method utilizes the downward flow of the reactor primary coolant, and therefore does not need an electric motor for rotation, an external power supply, a connection cable thereof, or the like, and can be configured with low cost. Moreover, the installation operations are simple and easy since the cableless rotating capsule 20 is simply put in the passage of the reactor primary coolant.

0021 Next, as shown in step B of FIG. 2, the irradiated rotating capsule 20A taken out of the reactor 40 is disassembled. As shown in step C of FIG. 2, the irradiated heat media 14A including the irradiated Ir microspheres 12A are taken out. Then, as shown in step D of FIG. 2, the approximately 220 irradiated Ir microspheres 12A are taken out. Next, as shown in step E of FIG. 2, each of the irradiated Ir microspheres 12A is loaded into a container 50. As shown in step F of FIG. 2, the container 50 is measured and checked for a predetermined γ-ray dose (for example, 13 Ci). As shown in step G of FIG. 2, the container 50 is sealed. As shown in step H of FIG. 2, the sealed containers 50A are transported in a transportation container 52.

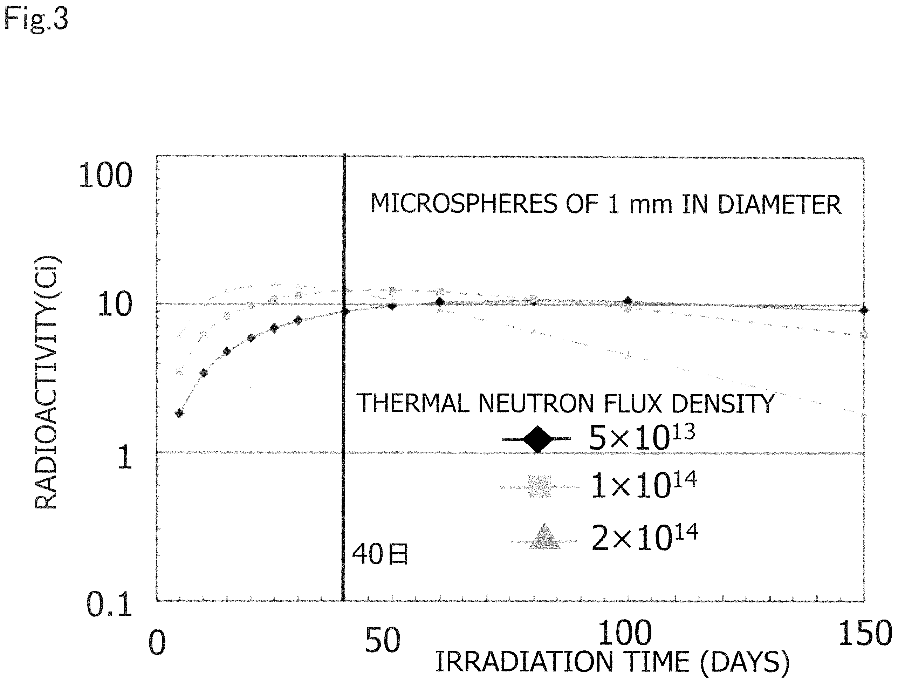

0022 FIG. 3 shows a nuclear evaluation of Ir targets containing enriched ¹⁹¹Ir in examining the present invention.

0023 To manufacture ¹⁹²Ir, a thermal neutron flux density of approximately 1 to 2 × 10¹⁴ (n/cm²) is needed regardless of whether to enrich ¹⁹¹Ir. For example, in the case of transportation in every two months, the irradiation time can be 40 days.

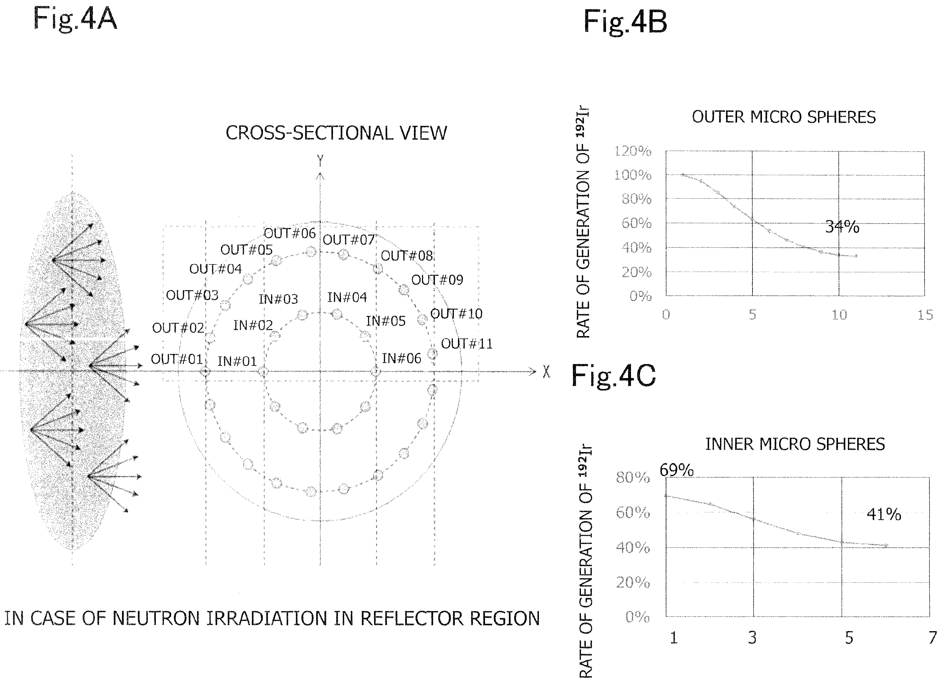

0024 Next, FIG. 4 shows a result of an examination of the effect (self-shielding effect) of an ¹⁹¹Ir reaction cross section similarly in examining the present invention.

0025 The reaction cross section of Ir with neutrons is greater than that of uranium, and Ir microspheres in front block neutrons (self-shielding). Suppose that, as shown to the left in FIG. 4A, neutrons come in one direction (in the diagram, from the left), and Ir microspheres are arranged on an inner circle and an outer circle as shown in a cross-sectional view shown to the right in FIG. 4A. In such a case, the amount of generation of ¹⁹²Ir is nonuniform as shown in FIG. 4B (the rate of generation of ¹⁹²Ir in the outer spheres) and FIG. 4C (the rate of generation of ¹⁹²Ir in the inner spheres). Rotation makes the amount of generation uniform since Ir microspheres are irradiated with neutrons in all directions. Note that Ir microspheres are desirably loaded only on the outer circle since the amount of generation differs between the inner circle and the outer circle.

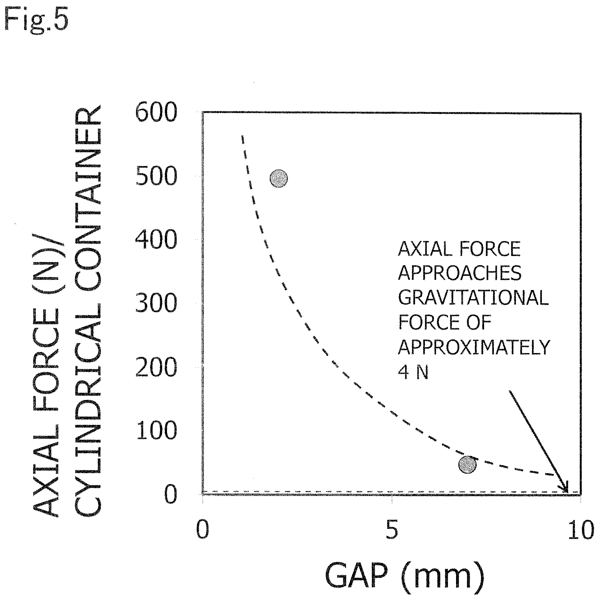

0026 Moreover, FIG. 5 shows a result of an evaluation of the rotatability of the rotating capsule by the reactor primary coolant.

0027 Since the flow rate in a gap portion is 1000 times the rotation speed or more, the flow at the surface of the cylindrical container passes through the gap portion without rotation. A mechanism for converting the axial flow into a rotational flow is therefore needed. In this system, an excessive axial force as shown in FIG. 5 is found to occur due to loss of the flow colliding with the cylindrical container and loss occurring in the gap portion. To rotate the cylindrical container, it is then found that a thrust bearing for supporting the axial force (axial load of approximately 50 N or more for a gap of 7 mm) needs to be applied.

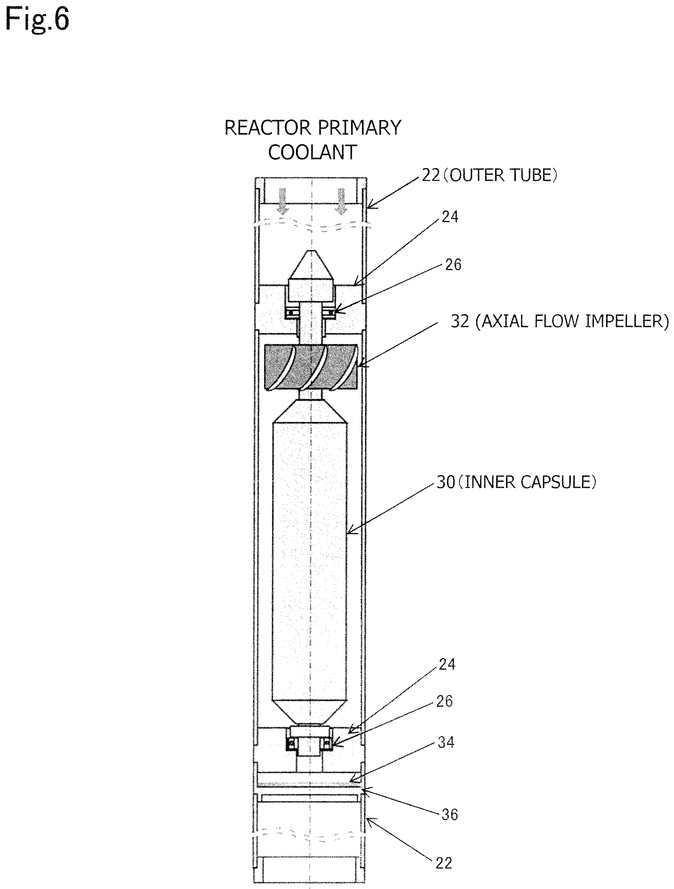

0028 FIG. 6 shows a state where an ¹⁹²Ir manufacturing rotating capsule is inserted into a primary coolant channel running vertically inside the reactor 40.

0029 An inner capsule 30 made of A5052, for example, and accommodating the rotating capsule 20 is accommodated in an outer tube 22 made of A6063, for example. The inner capsule 30 is then inserted into a reactor primary coolant channel. The shaft of the inner capsule 30 is rotatably supported in the outer tube 22 at the top and bottom by bearings 26 made of SUS304, for example, and bearing holders 24 made of A5052, for example. The shaft is further equipped with an axial flow impeller 32 similarly made of A5052. In the diagram, the reference numeral 34 denotes a mesh made of SUS304, for example, and the reference numeral 36 denotes a mesh holder made of A5052, for example. The axial flow impeller 32 is thus rotated by the downward flow of the reactor primary coolant, whereby the inner capsule 30 and the rotating capsule 20 therein are also rotated.

0030 The foregoing radiation source has a dose of, e.g., 13 Ci in view of the fact that the intended amount of radioactivity upon shipping from the reactor is 10 Ci. However, a radiation source of 39 Ci, i.e., 1.3 times of 30 Ci can be manufactured in view of future demand.

0031 In the foregoing embodiment, the radioactive isotope is described to be iridium Ir 192. The size and the number of layers of the heat medium 14, the number of microspheres, and the like are not limited to the foregoing embodiment.

### Reference Signs List

0032
10...iridium (Ir) metal
12, 12A...iridium (Ir) microsphere
14, 14A...heat mediun
20...rotating capsule
30...inner capsule
32...axial flow impeller
40...nuclear reactor
50, 50A...container
52...transportation container

## Claims

1. A radiation source for a nondestructive inspection, comprising an irradiation target shaped into a small sphere (12) with a diameter of 0.5 to 1.5 mm, **characterized in that** the spehere (12) was manufactured by dropping molten iridium into a liquid.

2. The radiation source for a nondestructive inspection according to claim 1, wherein the spherical irradiation target is iridium metal containing natural or enriched iridium 191.

## Patentansprüche

1. Strahlungsquelle zur zerstörungsfreien Prüfung, mit einem Bestrahlungsziel in Form einer kleinen Kugel (12) mit einem Durchmesser von 0,5 bis 1,5 mm, **dadurch gekennzeichnet, dass** die Kugel (12) durch Eintropfen von geschmolzenem Iridium in eine Flüssigkeit hergestellt wurde.

2. Strahlungsquelle zur zerstörungsfreien Prüfung nach Anspruch 1, wobei das kugelförmige Bestrahlungsziel Iridium ist, das natürliches oder angereichertes Iridium 191 enthält.

## Revendications

1. Source de rayonnement pour une inspection non destructive, comprenant une cible d'irradiation en forme de petite sphère (12) d'un diamètre de 0,5 à 1,5 mm, **caractérisée en ce que** la sphère (12) à été fabriquée par goutter iridium fondu dans un liquide.

2. Source de rayonnement pour une inspection non destructive selon la revendication 1, dans laquelle la cible d'irradiation sphérique est de l'iridium contenant de l'iridium 191 naturel ou enrichi.
